# EUROPÄISCHE PATENTSCHRIFT

(11) **EP 0 840 190 B1**
(45) Veröffentlichungstag und Bekanntmachung des Hinweises auf die Patenterteilung: **09.10.2002**
(21) Anmeldenummer: 97118576.4
(22) Anmeldetag: 25.10.1997
(51) Int. Cl.: G05D 16/06, F16C 32/06

(54) **Druckregler für den Medienstrom eines Hydrostatik-oder Aerostatik-Lagers**
Pressure controller for the fluid flow of a hydrostatic or aerostatic journal bearing
Régulateur de pression pour l'écoulement d'un palier hydrostatique ou aérostatique

(30) Priorität: 05.11.1996 DE 19645535
(43) Veröffentlichungstag der Anmeldung: 06.05.1998
(73) Patentinhaber: Schönfeld, Robert, 73095 Albershausen (DE)
(72) Erfinder: Schönfeld, Robert, 73095 Albershausen (DE)
(74) Vertreter: Gleiss, Alf-Olav, Dr.jur. Dipl.-Ing.

(56) Entgegenhaltungen:
- EP-A- 0 099 180
- DE-A- 3 338 075
- DE-C- 3 533 037
- GB-A- 2 122 273
- US-A- 4 113 325
- SOVIET INVENTIONS ILLUSTRATED Section PQ, Week 8608 8.März 1986 Derwent Publications Ltd., London, GB; Class P54, AN 86-054248 XP002075655 & SU 1 171 214 A (MACH CONS SPEC DES) , 7.August 1985
- SOVIET INVENTIONS ILLUSTRATED Section PQ, Week 8509 10.April 1985 Derwent Publications Ltd., London, GB; Class Q62, AN 85-055218 XP002075656 & SU 1 105 704 A (ODESS SPEC TOOLS) , 30.Juli 1984

## Beschreibung

Die Erfindung betrifft einen Regler zur Regelung eines mindestens einer Hydrostatik- oder Aerostatiktasche einer Lagerung, Gewindespindelmutter oder Führung zugeführten Medienstromes gemäß Oberbegriff des Anspruchs 1.

Regler der hier angesprochenen Art sind für Flüssigkeiten bekannt (DE 35 33 037 C1). Sie zeichnen sich dadurch aus, daß der von dem Regler beeinflußte Fluidstrom bei einer Druckerhöhung in der Hydrostatiktasche zunimmt. Hydrostatische Lagerungen, Gewindespindelmuttern oder Führungen, die mit Reglern der oben genannten Art zusammenwirken, zeichnen sich aufgrund dessen dadurch aus, daß die erreichbaren Steifen und Belastungen dieser Elemente bei vergleichbaren technischen Daten wesentlich größer als mit alternativen Systemen sind. Die Durchflußmenge Q ist proportional zur dritten Potenz der Spalthöhe beziehungsweise der Höhe h des von dem Medium durchströmten Spalts der Tasche. Es ergibt sich bei laminarer Strömung die Bedingung Q ~ p • h³/η, wobei mit η die dynamische Viskosität des Mediums beziehungsweise der Flüssigkeit bezeichnet wird. Dieser Zusammenhang ist in ähnlicher Weise für gasförmige Medien gültig. Aus der hier wiedergegeben Zuordnung ergibt sich, daß die Änderung der Höhe h aufgrund einer Druckänderung in der Hydrostatiktasche durch eine Zunahme des Flüssigkeitsstromes beziehungsweise der Durchflußmenge Q reduziert, beziehungsweise praktisch ganz vermieden werden kann. Wird also eine Hydrostatiktasche so belastet, daß der in dieser Hydrostatiktasche herrschende Druck erhöht wird, so kann einer Spalthöhenänderung und damit einer Verlagerung der geführten beziehungsweise gelagerten Teile dadurch entgegengewirkt werden, daß der vom Regler in die Hydrostatiktasche fließende Fluidstrom vergrößert wird. Hierdurch ergibt sich eine höhere Steife.

Es hat sich herausgestellt, daß der bekannte Regler, der einen ein Steuerelement umfassenden variablen zweiten Strömungswiderstand, beispielsweise eine Drossel aufweist, unter bestimmten Betriebsbedingungen, insbesondere bei relativ großen Flüssigkeitsströmen sowie bei Flüssigkeiten mit niedriger Viskosität, wie sie vor allem bei schnell drehenden Lagerungen benötigt werden, sowie bei relativ geringen Drücken in der zugehörigen Hydrostatiktasche zu äußerst störenden Schwingungen neigt.

Es ist daher Aufgabe der Erfindung, einen für flüssige und auch für gasförmige Medien verwendbaren Regler zu schaffen, der diesen Nachteil nicht aufweist.

Zur Lösung dieser Aufgabe wird ein Regler vorgeschlagen, der die in Anspruch 1 genannten Merkmale aufweist. Der Regler zeichnet sich durch einen Bypass aus, der einerseits mit der Hydrostatikoder Aerostatiktasche, nachfolgend auch Tasche genannt, und andererseits über einen ersten Strömungswiderstand mit der Medienversorgung verbunden ist, welche über diesen Regler die Tasche versorgt.

Der Bypass ist mit einem dritten Strömungswiderstand versehen. Die Tasche wird also mit zwei Medienströmen versorgt, von denen ein erster Teilstrom von einem als variabler zweiter Strömungswiderstand wirkenden Steuerelement des Reglers beeinflußt wird und ein zweiter Teilstrom über den Bypass geführt wird. Der zweite Medienstrom durch den Bypass reduziert den ersten Medienstrom durch den variablen zweiten Strömungswiderstand insbesondere bei niedrigen Drücken in der Hydro- oder Aerostatiktasche und also auch am Reglerausgang bei entsprechender Auslegung auf einen Bruchteil des Wertes ohne Bypass. Dadurch werden insbesondere bei niedrigen Drücken in der Hydro- oder Aerostatiktasche bei einer Veränderung des Medienstromes durch den Regler aufgrund unterschiedlicher Drücke in der Hydro- oder Aerostatiktasche die relativen Veränderungen des Medien-Teilstromes durch den variablen zweiten Strömungswiderstand wesentlich vergrößert, wodurch aufgrund des oben wiedergegebenen mathematischen Zusammenhanges, der zumindest angenähert auch für das als variabler zweiter Strömungswiderstand wirkende Steuerelement gilt, das Steuerelement größere Steuerbewegungen durchführt und somit eine geringere Auswirkung auf den Medienstrom hat. Aufgrund des Bypasses führt das Steuerelement - insbesondere bei niedrigen Drücken in der Hydrostatik- oder Aerostatiktasche- also größere Steuerbewegungen durch, so daß eine weniger direkte Beeinflussung des ersten Teilstromes zur Tasche und dadurch eine reduzierte Schwingungsneigung gegeben sind.

Bevorzugt wird eine Ausführungsform des Reglers, der die in Anspruch 2 genannten Merkmale aufweist und sich dadurch auszeichnet, daß der in dem Bypass vorgesehene dritte Strömungswiderstand auf einen Medienstrom ausgelegt oder eingestellt ist, der etwa dem durch den Regler fließenden Medienstrom entspricht, welcher bei einem Druck am Reglerausgang gleich Null gegeben ist. Hierdurch wird der Durchfluß durch den variablen zweiten Strömungswiderstand des Reglers -bei dem in diesem Betriebszustand am Reglerausgang gegebenen Druck- ebenfalls gleich Null oder zumindest sehr klein. Durch den Bypass mit dieser bevorzugten Auslegung werden somit die Regelwege des als variabler zweiter Strömungswiderstand wirkenden Steuerelements in dem besonders schwingungsanfälligen Bereich bei niedrigen Drücken in der Hydro- oder Aerostatiktasche in besonderem Maße vergrößert, wodurch die Schwingungsneigung des Reglers besonders verringert wird.

Weitere vorteilhafte Ausgestaltungen dieses Reglers ergeben sich aus den übrigen Unteransprüchen.

Zur Lösung der genannten Aufgabe wird für die Regelung von flüssigen Medien außerdem ein Regler vorgeschlagen, der die in Anspruch 4 wiedergegebenen Merkmale umfaßt. Der Regler zeichnet sich dadurch aus, daß er drei durch das Steuerelement getrennte Druckräume hat und daß ein erster Druckraum mit einem Gasvolumen in Verbindung steht. Das Steuerelement wird einerseits mit dem Druck der Medienversorgung, andererseits mit einem über den ersten Strömungswiderstand im zweiten Druckraum wirkenden zweiten Druck und weiter über den variablen zweiten Strömungswiderstand im dritten Druckraum wirkenden dritten Druck beaufschlagt. Aufgrund der Verbindung des ersten Druckraumes mit einem Gasvolumen wirken sich Druckschwingungen in der Verbindungsleitung von der Pumpe zum Regler nicht oder nur in reduzierter Form im ersten Druckraum aus. Auch kann das Steuerelement aufgrund der Kompressibilität des Gasvolumens bei dynamischen Druckänderungen insbesondere im zweiten, aber auch im dritten Druckraum dynamisch ausweichen. Auch durch diese Maßnahme wird somit die Schwingungsneigung des Reglers vermindert.

Bevorzugt wird weiter eine Ausführungsform des Reglers für flüssige Medien entsprechend den Merkmalen in den Ansprüchen 5 bis 7, die sich dadurch auszeichnet, daß das Gasvolumen im ersten Druckraum unmittelbar an das Steuerelement angrenzt beziehungsweise nur durch ein elastisches Dichtelement vom Steuerelement getrennt ist und daß dieses Gasvolumen mit einem weiteren Gasraum in Verbindung steht, welcher sich zum Beispiel in der Gasseite eines Hydrospeichers befindet, dessen Fluidseite direkt mit der die Hydrostatiktasche versorgenden Pumpe verbunden ist.

Bei eingeschalteter Pumpe ist das Gasvolumen im ersten Druckraum und in dem weiteren Gasraum auf den Pumpendruck verdichtet. Zweckmäßigerweise ist das Gasvolumen bei abgeschalteter Pumpe im ersten Druckraum und im weiteren Gasraum auf einen Druck möglichst wenig unterhalb des Pumpendruckes vorgespannt. Hierdurch wird die Erwärmung des Gases bei der beim Einschalten der Pumpe erfolgenden Verdichtung des Gases vermindert. Eine direkte Verbindung von der Pumpe zu dem ersten Druckraum wird bei dieser Ausführungsform des Reglers nicht benötigt.

Aufgrund der Kompressibilität des Gasvolumens kann sich das Steuerelement bei einem Druckstoß in der Tasche leicht in Richtung des Gasvolumens im ersten Druckraum bewegen und damit den Fluidstrom zur Tasche aufsteuern. Durch die erhöhte Beweglichkeit ergibt sich eine größere Steuerbewegung, die Störungen durch Schwingungen vermeidet.

Weitere vorteilhafte Ausgestaltungen dieses Reglers ergeben sich aus den übrigen Unteransprüchen.

Die genannte Aufgabe wird für flüssige Medien auch durch einen Regler mit den in Anspruch 10 genannten Merkmalen gelöst, der sich dadurch auszeichnet, daß der erste Druckraum mit Flüssigkeit gefüllt ist und über einen vierten Strömungswiderstand mit der Medienversorgung, welche die Hydrostatiktasche versorgt, verbunden ist, und daß der erste Druckraum so groß gestaltet ist, daß die dort vorhandene Flüssigkeit aufgrund ihrer Kompressibilität Schwingungen des Steuerelements dämpft. Durch die Kompressibilität der Flüssigkeit im ersten Druckraum und den vierten Strömungswiderstand werden Schwingungen im ersten Druckraum aufgrund von Schwingungen in der Medienversorgung zumindest gemildert. Auch kann das Steuerelement im ersten Druckraum bei dynamischen Druckänderungen im zweiten und dritten Druckraum dynamisch ausweichen, wodurch ebenfalls eine geringere Schwingungsanfälligkeit des Reglers erreicht wird. Durch diese Maßnahmen wird auch ohne Gasfüllung in vielen Fällen eine ausreichende Dämpfung der Reglerschwingungen erreicht.

Weiter wird die Aufgabe für flüssige Medien auch durch einen Regler entsprechend den in Anspruch 11 bis 13 genannten Merkmalen gelöst, der sich dadurch auszeichnet, daß der erste Druckraum durch ein elastisches Federelement von der umgebenden Atmosphäre oder einem gasgefüllten Raum, in welchem ein Druck kleiner oder gleich dem Druck in der Medienversorgung herrscht und einem vierten Strömungswiderstand von der Medienversorgung getrennt ist. Hierdurch kann das Steuerelement aufgrund der Nachgiebigkeit des im wesentlichen aus einer elastischen Platte bestehenden Federelements bei dynamischen Druckänderungen in dem zweiten und dritten Druckraum dynamisch ausweichen, wodurch die Druckschwingungen im zweiten und dritten Druckraum reduziert beziehungsweise praktisch ganz verhindert werden. Weiter werden durch den vierten Strömungswiderstand zwischen dem ersten Druckraum und der Medienversorgung durch Druckschwingungen in der Medienversorgung verursachte Schwingungen im ersten Druckraum vermindert.

Zur Lösung der genannten Aufgabe wird für die Regelung von gasförmigen Medien außerdem ein Regler vorgeschlagen, der die in Anspruch 14 bis 16 wiedergegebenen Merkmale umfaßt. Der Regler zeichnet sich dadurch aus, daß er drei durch ein Steuerelement getrennte Druckräume hat, und daß ein erster Druckraum mit einer Flüssigkeit gefüllt ist, welche unmittelbar an das Steuerelement angrenzt beziehungsweise nur durch ein elastisches Dichtelement vom Steuerelement getrennt ist und daß der erste Druckraum über eine ebenfalls flüssigkeitsgefüllte Verbindungsleitung mit einem weiteren mit Flüssigkeit gefüllten Raum verbunden ist, welcher sich zum Beispiel in der Flüssigkeitsseite eines Hydrospeichers befindet, dessen Gasseite direkt mit der Medienversorgung verbunden ist. Aufgrund des Flüssigkeitsvolumens im ersten Druckraum wird das Steuerelement an schnellen Bewegungen gehindert. Hierdurch ist diese Ausführungsform des Reglers bei Regelungen von gasförmigen Medien weniger schwingungsanfällig. Eine direkte Verbindung von der Medienversorgung zu dem ersten Druckraum wird bei dieser Ausführungsform des Reglers nicht benötigt.

Besonders bevorzugt werden Ausführungsbeispiele der Regler, bei denen das Steuerelement als nachgiebige -vorzugsweise runde- elastische Platte ausgebildet ist. Derartige Regler sind relativ einfach und kompakt gebaut und damit leicht realisierbar.

Weitere vorteilhafte Ausgestaltungen ergeben sich aus den übrigen Unteransprüchen.

Die Erfindung wird im folgenden anhand der Zeichnung näher erläutert. Es zeigen:
- Figur 1: einen Hydraulikplan eines ersten Ausführungsbeispiels eines Reglers für flüssige oder gasförmige Medien;
- Figur 2: einen Hydraulikplan eines zweiten Ausführungsbeispiels eines Reglers für flüssige oder gasförmige Medien;
- Figur 3: einen Hydraulikplan eines dritten Ausführungsbeispiels eines Regler für flüssige Medien;
- Figur 4: einen Hydraulikplan eines vierten Ausführungsbeispiels eines Reglers für flüssige Medien;
- Figur 5: eine Draufsicht auf einen geöffneten Regler, der eine Ausführungsform gemäß den Figuren 1, 3 und 4 darstellt;
- Figur 6: einen Querschnitt durch ein weiteres Ausführungsbeispiel eines Reglers und
- Figur 7: einen Querschnitt durch ein weiteres Ausführungsbeispiel eines Reglers.

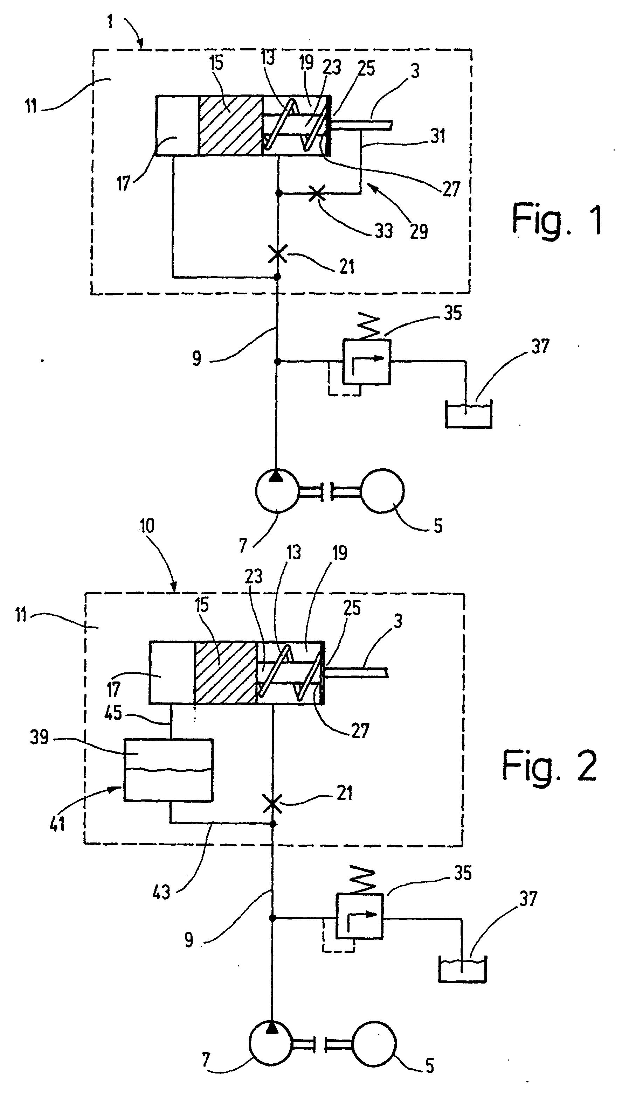

Der Hydraulikplan in Figur 1 zeigt einen Regler 1, der dazu dient, einen Medienstrom zu regeln, der einem Verbraucher, insbesondere einer hier nicht dargestellten hydrostatischen oder einer aerostatischen Tasche über eine Medienverbindung 3, zugeführt wird. Derartige Taschen finden sich bei hydrostatischen oder aerostatischen Lagerungen, Gewindespindelmuttern und Führungen. Der Regler 1 wird von einer von einem Motor 5 angetriebenen Pumpe 7, die als Medienversorgung dient und einen Medienstrom bereitstellt, über eine Zufuhrleitung 9 beispielsweise mit einem flüssigen Medium, vorzugsweise Öl, versorgt. In einem hier nur angedeuteten Gehäuse 11 des Reglers sind drei von einem gegen die Kraft eines Federelements 13 beweglichen Steuerelement 15 getrennte Druckräume vorgesehen. Der erste Druckraum 17 ist unmittelbar über die Zufuhrleitung 9 mit der Pumpe 7 verbunden, und mit einem ersten Druckniveau p1 beaufschlagt. Der zweite Druckraum 19 ist über einen -vorzugsweise nicht veränderbaren- ersten Strömungswiderstand 21 mit der Zufuhrleitung 9 und damit mit der Pumpe 7 verbunden. Im zweiten Druckraum 19 ist bei einer Strömung durch den ersten Strömungswiderstand 21 ein zweites Druckniveau p2 gegeben. Das Steuerelement 15 bildet, hier über einen angedeuteten Steuerkolben 23, einen variablen zweiten Strömungswiderstand 25 aus, der den zweiten Druckraum 19 von einem ein Druckniveau p3 aufweisenden dritten Druckraum trennt, der durch die zu der hier nicht dargestellten Tasche führenden Fluidverbindung 3 gebildet wird. Im Betrieb der Pumpe 7 wird Flüssigkeit über die Zufuhrleitung 9 und über den ersten Strömungswiderstand 21 in den zweiten Druckraum 19 gefördert. Von dort gelangt die Flüssigkeit über den variablen zweiten Strömungswiderstand 25, nämlich über einen von dem Steuerelement 15 beeinflußten Durchlaßspalt 27, in die Medien- beziehungsweise Fluidverbindung 3 und weiter zur Tasche. Der erste Strömungswiderstand 21 bewirkt im Betrieb des Reglers 1 einen Druckabfall, so daß das im zweiten Druckraum 19 gegebene zweite Druckniveau p2 kleiner ist als das erste Druckniveau p1 im ersten Druckraum 17. Weiter bewirkt der variable zweite Strömungswiderstand 25 im Betrieb einen Druckabfall, so daß das in der Flüssigkeitsverbindung 3 gegebene Druckniveau p3, welches dem Druck in der Hydrostatiktasche entspricht, kleiner als p2 ist.

Figur 1 zeigt, daß das Steuerelement 15 also einerseits mit dem Druck p1 im ersten Druckraum 17 und andererseits mit dem im zweiten Druckraum 19 gegebenen Druck p2 sowie dem im dritten Druckraum beziehungsweise in der Medienverbindung 3 gegebenen Druck p3 beaufschlagt wird. Zusätzlich wirkt die Kraft des Federelements 13 so auf das Steuerelement 15, daß die Federkraft mit der auf dem Druckniveau p2 und p3 beruhenden Druckkraft gleichgerichtet ist.

Im stationären Betrieb des Reglers, also bei konstantem Pumpendruck p1 und konstantem Druck p3 ist die Summe der Kräfte aus den drei genannten Drücken und der Federkraft auf das Steuerelement 15 gleich Null. Wird der Druck p2 bei konstantem Druck p1 und p3 durch eine Störung zum Beispiel verkleinert, so würde das Steuerelement 15 durch den dann überwiegenden Druck p1 in der Figur 1 nach rechts bewegt und die Größe des variablen zweiten Strömungswiderstandes 25 so vergrößert, daß die Summe der Kräfte auf das Steuerelement 15 wieder gleich Null ist, so daß also der Druck p2 seinen ursprünglichen Wert wieder erreicht. Bei einer Vergrößerung von p2 aufgrund einer Störung würde der umgekehrte Vorgang ablaufen. Durch den Regler 1 wird also bei konstantem Druck p1 und p3 ein konstanter Druck p2, also ein konstanter Differenzdruck (p1 - p2) über dem ersten Strömungswiderstand 21 und also ein konstanter Durchfluß durch diesen ersten Strömungswiderstand 21 und somit durch den Regler 1 eingestellt. Wird der Druck p3 in dem durch die Fluidverbindung 3 gegebenen dritten Druckraum und folglich in der Hydrostatiktasche genügend langsam verändert, so daß dynamische Kräfte vernachlässigt werden können, so gilt die Aussage, daß die Summe der Kräfte aus den drei Druckwerten und der Federkraft gleich Null ist, auch hierfür. Damit ist einem höheren Druck p3 ein niedrigerer Druck p2, also ein höherer Differenzdruck (p1 - p2) und somit ein größerer Durchfluß Q zugeordnet.

Der in Figur 1 dargestellte Regler 1 zeichnet sich durch einen Bypass 29 aus, der durch eine Verbindungsleitung 31 gebildet wird, die einerseits an der Fluidverbindung 3 und andererseits über den ersten Strömungswiderstand 21 mit der Zufuhrleitung 9 verbunden ist. Der Bypass 29 ist mit einem dritten Strömungswiderstand 33 versehen, der als -auch einstellbare- Festdrossel ausgebildet ist. Die an die Medienverbindung 3 angeschlossene Tasche wird also einerseits über den dritten Strömungswiderstand 33 im Bypass 29 und andererseits über den durch den Steuerkolben 23 realisierten variablen zweiten Strömungswiderstand 25 mit Flüssigkeit versorgt. Obige Ausführungen gelten sinngemäß auch für gasförmige Medien.

Bei Druckänderungen in der Hydro- oder Aerostatiktasche sind aufgrund des durch den Bypass 29 zum Verbraucher geführten Teilfluidstromes größere Auslenkungen des Steuerelements 15, das beispielsweise als elastische Platte ausgebildet sein kann, erforderlich. Das Verhalten des Reglers 1 ist damit nicht mehr so schwingungsempfindlich, wie dies bei herkömmlichen Reglern der Fall ist.

Der in Figur 2 wiedergegebene Hydraulikplan zeigt ein zweites Ausführungsbeispiel eines Reglers 10 zur Regelung eines Medienstromes, der fast gleich aufgebaut ist wie der in Figur 1 erläuterte Regler 1. Gleiche Teile sind mit gleichen Bezugsziffern versehen, so daß insofern auf die Erläuterungen zu Figur 1 verwiesen wird. Im folgenden wird zunächst unterstellt, daß es sich bei dem von dem Regler 10 beeinflußten Medienstrom um einen Flüssigkeitsstrom handelt.

Der Regler 10 unterscheidet sich von dem in Figur 1 dargestellten Ausführungsbeispiel darin, daß der Bypass 29 entfällt. Der erste Druckraum 17 ist hier mit einem Gasvolumen 39 verbunden, das beispielsweise in einem Vorratsbehälter 41 beziehungsweise Hydrospeicher druckdicht eingeschlossen ist. Der Vorratsbehälter 41 ist über eine Versorgungsleitung 43 mit der Zufuhrleitung 9, somit auch mit der Pumpe 7, verbunden. Die beiden Medien in dem Hydrospeicher sind in diesem Ausführungsbeispiel durch eine weitgehend gas- und flüssigkeitsdichte Membran getrennt. Der mit Gas gefüllte Bereich (Gasvolumen 39) des Hydrospeichers ist über eine Anschlußleitung 45 mit dem ersten Druckraum 17 verbunden, der mit Flüssigkeit gefüllte Bereich mit der Versorgungsleitung 43. Vorzugsweise ist der erste Druckraum 17 mit Gas so gefüllt, daß dieses unmittelbar am Steuerelement 15 anliegt oder nur durch ein Dichtelement von diesem getrennt ist. Bei einer derartigen Ausgestaltung ist das Steuerelement 15 einerseits mit der Flüssigkeit in dem zweiten Druckraum 19 und andererseits mit dem Gasvolumen 39, das sich bis in den ersten Druckraum 17 fortsetzt, beaufschlagt.

Da das Gas des Gasvolumens 39 und damit auch im ersten Druckraum 17 durch die beim Einschalten der Pumpe 7 in den Hydrospeicher einströmende Flüssigkeit auf das Druckniveau p1 verdichtet wird, wirkt auch bei dem in Figur 2 dargestellten Regler 10 im ersten Druckraum 17 das von der Pumpe 7 zur Verfügung gestellte erste Druckniveau p1, während im zweiten Druckraum 19 das zweite Druckniveau p2 und im dritten Druckraum 3 das dritte Druckniveau p3 anliegt.

Bei den Erläuterungen zu Figur 2 wurde davon ausgegangen, daß über den Regler 10 ein Verbraucher, beispielsweise eine Hydrostatiktasche, mit einer (Hydraulik-)Flüssigkeit versorgt wird. Entsprechend erfolgt die Medienversorgung über eine motorbetriebene Flüssigkeitspumpe. Der erste Drückraum 17 ist hier mit einem Gasvolumen gefüllt beziehungsweise verbunden.

Es ist jedoch auch möglich, den Regler 10 im Zusammenhang mit einem Verbraucher, beispielsweise einer Aerostatiktasche zu verwenden, der mit einem gasförmigen Medium von einer entsprechenden Medienversorgung beziehungsweise Kompressor oder Gasversorgung versorgt wird. In diesem Fall sind der erste Druckraum 17 und der Raum 39 nicht mit einem Gas, sondern mit einer Flüssigkeit gefüllt. Entsprechend sind die mit Gas und Flüssigkeit gefüllten Bereiche des Hydrospeichers vertauscht.

Es zeigt sich also, daß die bei dem Regler 10 in Figur 2 verwendeten Medien ausgetauscht werden können, daß der Regler also sowohl bei der Versorgung von Hydrostatiktaschen als auch bei der Versorgung von Aerostatiktaschen Verwendung finden kann.

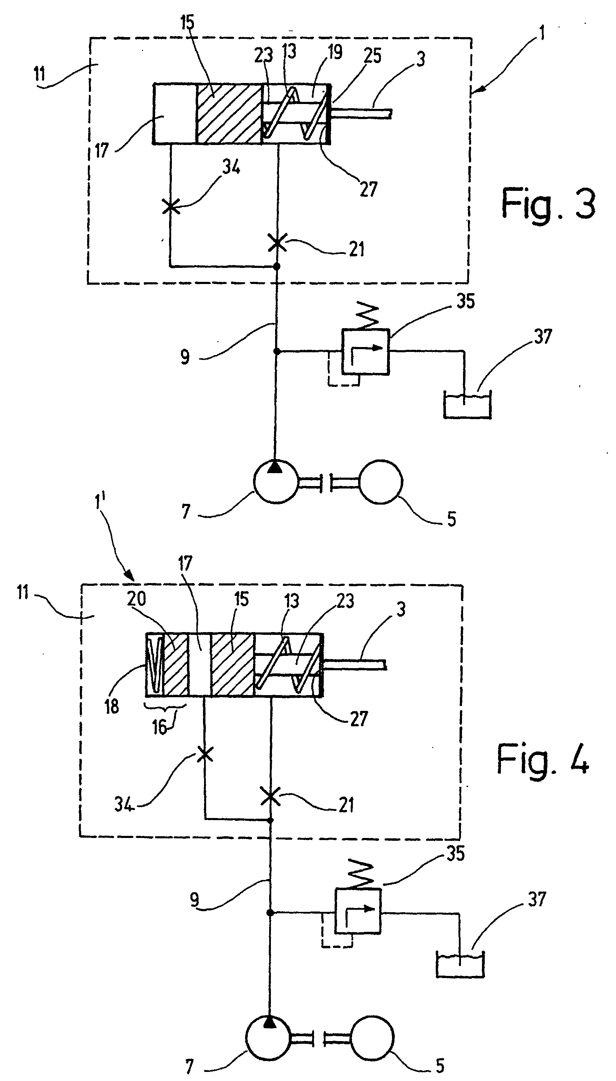

Die Figur 3 zeigt einen Hydraulikschaltplan eines Reglers, der weitgehend dem anhand von Figur 1 erläuterten entspricht. Gleiche Teile sind mit gleichen Bezugsziffern versehen, so daß auf die Beschreibung zu Figur 1 verwiesen wird. Gegenüber dem in Figur 1 dargestellten Regler entfällt in Figur 3 der Bypass. Zusätzlich ist hier in Figur 3 der erste Druckraum 17 durch einen vierten Strömungswiderstand 34 mit der als Medienversorgung dienenden Pumpe 7 verbunden. Wird der erste Druckraum 17 relativ groß ausgeführt, so wird -wie durch das Gasvolumen in Figur 2- eine Nachgiebigkeit des ersten Druckraumes 17 und durch den vierten Strömungswiderstand 34 eine Abkoppelung des ersten Druckraumes 17 von den Schwingungen in der Leitung von der Pumpe 7 zum Regler erreicht, so daß auch mit dieser Ausführungsform Druckschwingungen in den drei Druckräumen entgegengewirkt werden kann, wodurch eine schwingungsgedämpfte Reglerausführung erreicht wird.

Die Figur 4 zeigt einen Hydraulikplan eines weiteren Ausführungsbeispiels eines Reglers. Teile, die auch im Hydraulikplan gemäß Figur 1 enthalten sind, sind mit gleichen Bezugsziffern versehen. Es wird insofern auf die Beschreibung zu Figur 1 verwiesen. Gegenüber dem in Figur 1 dargestellten Regler entfällt in Figur 4 der Bypass. In Figur 4 ist allerdings -in Abweichung zu Figur 1 -der erste Druckraum 17 gegenüber dem Atmosphärendruck oder einem Gasvolumen mit geringerem Druck als der der Medienversorgung durch ein elastisches Federelement 16, hier durch einen zusätzlichen, an einer Feder 18 abgestützten beweglichen Kolben 20 oder eine elastische Platte, die druckdicht mit dem Gehäuse 11 verbunden ist, begrenzt. Auch hierdurch wird eine Nachgiebigkeit des ersten Druckraumes 17 erreicht, so daß auch hier mit dieser Ausführungsform Druckschwingungen in den drei Druckräumen entgegengewirkt werden kann, wodurch eine schwingungsgedämpfte Reglerausführung erreicht wird.

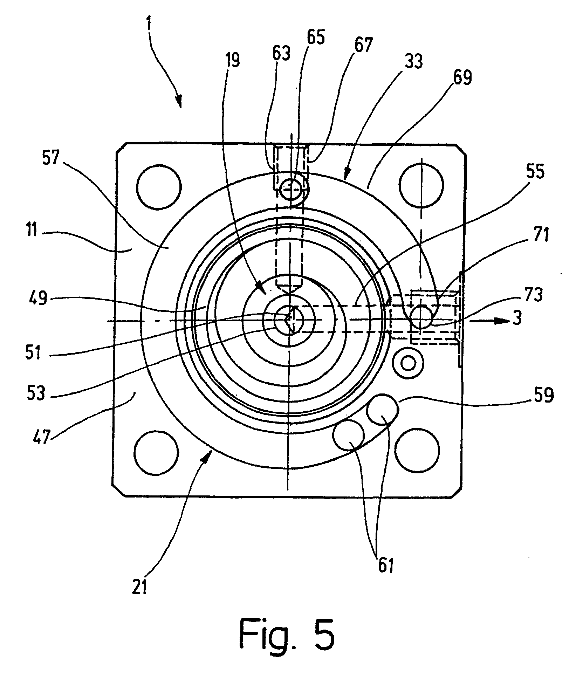

Figur 5 zeigt den Regler 1 in einer Realisierung, die dem Hydraulikplan gemäß Figur 1 entspricht. Gleiche Teile sind mit gleichen Bezugsziffern versehen, so daß auf die Beschreibung zu Figur 1 verwiesen wird.

Der in Figur 5 dargestellte Regler 1 weist ein Gehäuse 11 auf, in das ausgehend von der Oberfläche 47, eine hier kreisrund ausgebildete Vertiefung 49 eingebracht ist, die von einem hier aus Gründen der besseren Übersichtlichkeit nicht dargestellten Steuerelement abgedeckt wird. Das Steuerelement 15 ist als hier kreisrunde, elastische Platte ausgebildet, die die Vertiefung 49 in einen ersten Druckraum 17 und in einen zweiten Druckraum 19 unterteilt. Dazu wird die elastische Platte zumindest weitgehend druckdicht in der Vertiefung 49 angeordnet.

Hier ist in der Mitte der Vertiefung 49 ein kreisrunder Vorsprung vorgesehen, der eine zentrale Bohrung 51, die Teil der Fluidverbindung 3 ist, und eine die Bohrung 51 umgebende Ringfläche 53 aufweist. Das Steuerelement 15 beziehungsweise die elastische Platte bildet mit der Ringfläche 53 den variablen zweiten Strömungswiderstand 25. Die Ringfläche 53 liegt unterhalb der als Steuerelement 15 dienenden Platte. Sie berührt die als Steuerelement 15 dienende Platte nicht, wenn diese in den Regler 1 eingebracht und drucklos ist, da die Ringfläche 53 in einer anderen Ebene liegt als die Auflagefläche für die Platte.

Die zentrale Bohrung 51 wird durch einen parallel zur Bildebene und zur Oberfläche 47 verlaufenden Kanal 55 geschnitten, an den auf geeignete Weise die Medienverbindung 3 anschließbar ist. Dies ist durch einen Pfeil in Figur 5 angedeutet.

In die Oberfläche 47 des Gehäuses 11 ist eine über einen Kreisbogenabschnitt verlaufende erste Nut 57 eingebracht, an deren erstem Ende 59 über Bohrungen 61 das von der Pumpe 7 (siehe Figur 1) geförderte Medium eingespeist wird. Am zweiten Ende 63 der ersten Nut 57 ist ein senkrecht zur Bildebene verlaufender Kanal 65 vorgesehen, der in einen parallel zur Oberfläche 47 verlaufenden Verbindungskanal 67 mündet und eine Verbindung zwischen den Bohrungen 61 und der ersten Nut 57 einerseits und dem Verbindungskanal 67 andererseits bildet. Die Abmessungen der ersten Nut 57 sind so gewählt, daß diese als erster Strömungswiderstand 21 wirkt. Über den Kanal 65 und den Verbindungskanal 67 wird das über den ersten Strömungswiderstand 21 geförderte Medium in einen von der hier nicht dargestellten Platte abgedeckten Bereich der Vertiefung 49 geleitet, der den zweiten Druckraum 19 bildet. Dieser zweite Druckraum 19 wird also über die Bohrungen 61 und die den ersten Strömungswiderstand 21 bildende kreisbogenförmig verlaufende erste Nut 57, den Kanal 65 und den Verbindungskanal 67 mit dem Medium versorgt. Aus dem zweiten Druckraum 19 gelangt das Medium durch den Spalt zwischen der das Steuerelement 15 bildenden Platte und der Ringfläche 53 in die zentrale Bohrung 51 und von dort über den Kanal 55 also in die Medienverbindung 3.

Die Vertiefung 49 ist so tief ausgebildet, daß gegenüber der Oberfläche 47 auch bei eingelegter Platte eine restliche Vertiefung bestehen bleibt, die den ersten Druckraum 17 bildet. Dieser wird durch einen auf die Oberfläche 47 aufgebrachten Deckel abgeschlossen und auf geeignete Weise unmittelbar mit der Medienversorgung beziehungsweise der Pumpe 7 verbunden.

Die erste Nut 57, die beispielsweise über einen Kreisbogenabschnitt von circa 225° verläuft, setzt sich in einer zweiten Nut 69 fort, die sich über einen Bereich von circa 90° kreisbogenförmig in der Oberfläche 47 erstreckt. Die zweite Nut 69 bildet eine Verbindung zwischen dem von der ersten Nut 57 realisierten ersten Strömungswiderstand 21 und dem Kanal 55. Dazu ist das dem Kanal 65 gegenüberliegende Ende 71 der zweiten Nut 69 über einen senkrecht zur Bildebene verlaufenden Kanal 73 mit dem Kanal 55 und damit mit der Medienverbindung 3 verbunden. Das zu regelnde Medium gelangt also über die Kanäle 61 und über die erste Nut 57, die den ersten Strömungswiderstand 21 bildet, zur zweiten Nut 69, die damit den dritten Strömungswiderstand 33 bildet. Über diesen dritten Strömungswiderstand 33 gelangt das Medium zur Medienverbindung 3. Die erste und zweite Nut sind so ausgebildet, daß der Strömungswiderstand der ersten Nut 57 beziehungsweise des ersten Strömungwiderstandes 21 kleiner ist als der Strömungswiderstand der den dritten Strömungswiderstand 33 bildenden zweiten Nut 69. Um die verschiedenen Drossel- beziehungsweise Widerstandsverhältnisse einstellen zu können, wird für die erste Nut beispielsweise eine Tiefe von 2/10 mm und für die zweite Nut 69 eine Tiefe von 1/10 mm gewählt.

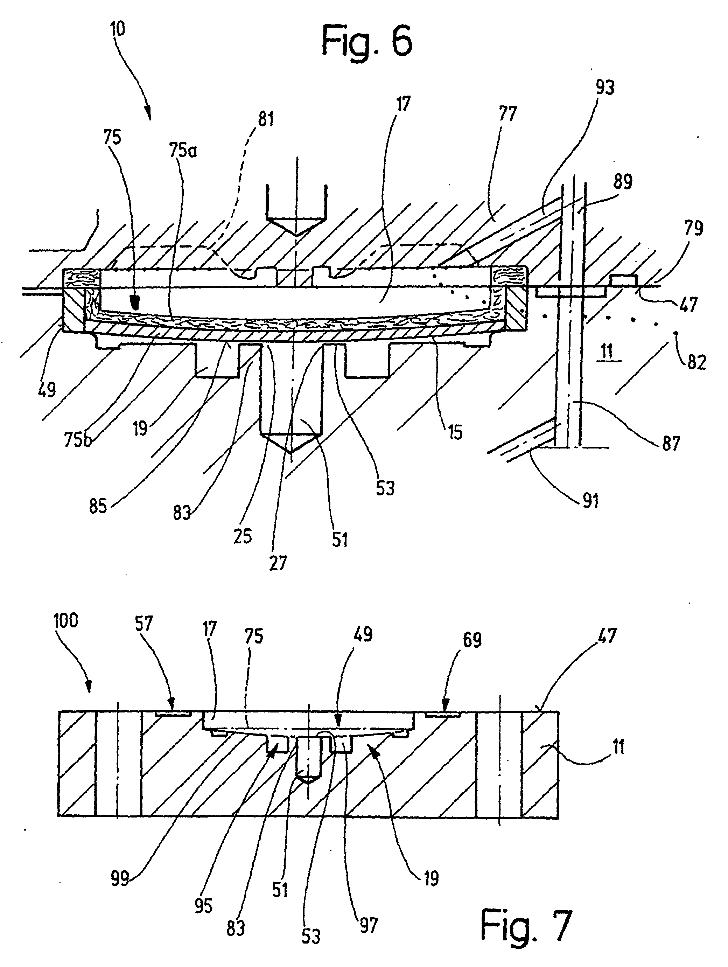

Figur 6 zeigt einen Querschnitt durch den Regler 10, dessen Hydraulikplan in Figur 2 wiedergegeben ist. Gleiche Teile sind mit gleichen Bezugsziffern versehen.

Der Regler 10 weist ein Gehäuse 11 auf, in das eine Vertiefung 49 eingebracht ist, die durch eine hier als elastische Platte 75, welche aus der das Steuerelement 15 bildenden elastischen Platte 75b und der auf dieser elastischen Platte aufliegenden, als Abdichtung verwendeten "Topfmembran" 75a besteht, in zwei Druckräume unterteilt wird. Oberhalb der elastischen Platte 75 ist ein mit dem ersten Druckniveau p1 beaufschlagter erster Druckraum 17 ausgebildet, während unterhalb der elastischen Platte 75 beziehungsweise des Steuerelements 15 ein mit dem zweiten Druckniveau p2 beaufschlagter zweiter Druckraum 19 vorgesehen ist.

Der erste Druckraum 17 ist hier durch einen Deckel 77 abgeschlossen, der auf der Oberfläche 47 dichtend aufliegt. Der Deckel 77 kann durch einen weiteren Regler gebildet werden. Es ist also möglich, eine Reihe von Reglern unmittelbar aneinander zu befestigen und damit eine sehr kompakte Bauform zu realisieren. Der Deckel 77 kann optional in seiner der Oberfläche 47 zugewandten Seite 79 mit einer Vertiefung 81 versehen sein, die unmittelbar mit dem ersten Druckraum 17 in Verbindung steht und diesen dadurch vergrößert. Die Vertiefung 81 kann - wie gestrichelt angedeutet- auch vergrößert ausgebildet sein und eine hier durch Punkte angedeutete Membran 82 einschließen, die innerhalb der Vertiefung ein Gas- von einem Flüssigkeitsvolumen trennt, so daß ein in den Regler 10 integrierter Vorratsbehälter beziehungsweise Hydrospeicher ausgebildet ist.

Am Grund der Vertiefung 49 im Gehäuse 11 ist ein zylindrischer Vorsprung 83 vorgesehen, der eine zentrale Bohrung 51 umgibt, die -wie anhand des in Figur 5 dargestellten Reglers 1 erläutert- über einen bei dem hier dargestellten Schnitt nicht sichtbaren Kanal 55 mit der Medienverbindung 3 verbunden ist. In der Bohrung 51 ist das Druckniveau p3 gegeben, das auch in der Medienversorgung 3 vorliegt.

Der Vorsprung 83 bildet eine Ringfläche 53 aus, die die Bohrung 51 umgibt und die mit einer Unterseite 85 der elastischen Platte 75b den variablen zweiten Strömungswiderstand 25 ausbildet, der anhand der Figuren 1 und 2 bereits erläutert wurde. Es wird hier noch einmal ausdrücklich darauf hingewiesen, daß der Grundaufbau der Regler 1 und 10, deren Hydraulikplan in den Figuren 1 und 2 dargestellt ist, gleich ist, so daß sich auch Übereinstimmungen im Aufbau des in Figur 5 gezeigten Reglers l und des anhand von Figur 6 erläuterten Reglers 10 ergeben.

Der in Figur 6 dargestellte Regler 10 zeichnet sich, wie aus den Erläuterungen zu Figur 2 ersichtlich, dadurch aus, daß der erste Druckraum 17 mit einem Gasvolumen 39 in Verbindung steht, hier unmittelbar selbst mit Gas gefüllt ist. Das hier als elastische Platte 75b ausgebildete Steuerelement 15 ist also über die hier als Topfmembran 75a ausgebildete, auf der Platte 75b aufliegende Abdichtung auf ihrer einen Seite, nämlich auf der dem ersten Druckraum 17 zugewandten Seite, mit einem Gasvolumen in Berührung, während auf ihrer anderen, dem zweiten Druckraum 19 zugewandten Seite Flüssigkeit beziehungsweise Öl vorhanden ist, die beziehungsweise das der Versorgung der Hydrostatiktasche dient. Die beiden Druckräume weisen unterschiedliche Druckniveaus auf, wobei aufgrund des anhand der Figuren 1 und 2 erläuterten Strömungswiderstands 21 das im ersten Druckraum 17 herrschende erste Druckniveau p1 größer ist als das im zweiten Druckraum 19 gegebene Druckniveau p2.

Das als elastische Platte 75b ausgebildete Steuerelement 15 wird in Abhängigkeit von der Druckdifferenz in den beiden Druckräumen 17 und 19 mehr oder weniger weit durchgebogen beziehungsweise ausgelenkt, so daß der Durchlaßspalt 27, der zwischen der Unterseite 85 der Platte 75b und der Ringfläche 53 gegeben ist, unterschiedliche Höhen h aufweist. Die durch den Durchlaßspalt 27 hindurchtretende Flüssigkeitsmenge hängt von der Höhe des Spaltes und dem dadurch gegebenen variablen zweiten Strömungswiderstand ab, der sich durch die mehr oder weniger weite Durchbiegung des Steuerelements 15, das heißt in Abhängigkeit der Druckdifferenz in den Druckräumen 17 und 19 ergibt. Es wird deutlich, daß hier der variable zweite Strömungswiderstand 25 beziehungsweise ein. Durchlaßspalt mit variabler Höhe h realisiert ist. Dabei ersetzt die elastische Platte 75b das in den Hydraulikplänen dargestellte Kolben-Federsystem und bildet das Steuerelement 15.

In das Gehäuse 11 ist eine Zuleitung 87 eingebracht, die senkrecht zur Oberfläche 47 verläuft und die in eine entsprechende Zuleitung 89 übergeht, die im Deckel 77 vorgesehen ist. Werden also mehrere Regler unmittelbar miteinander gekoppelt, wobei die auf den Oberflächen 47 aufliegenden Regler den Deckel des darunterliegenden Reglers bilden, so ergibt sich ein geschlossenes Zuleitungssystem durch die Zuleitungen 87 und 89, die mit der Medienversorgung oder einem Gasvolumen gekoppelt sind (siehe zum Beispiel Figur 1 und 2). Von den Zuleitungen 87 und 89 gehen Leitungsabschnitte 91 und 93 aus, von denen der Leitungsabschnitt 93 in den ersten Druckraum 17 mündet. Der Leitungsabschnitt 91 im Gehäuse 11 ist einem Druckraum zugeordnet, der zu einem unterhalb des Reglers 10 vorgesehenen, hier nicht dargestellten Regler gehört und den ersten Druckraum 17 bildet. Der Leitungsabschnitt 93 verbindet die Zuleitung 89 im Deckel 77 mit dem ersten Druckraum 17.

Figur 7 zeigt schließlich einen Querschnitt durch ein weiteres Ausführungsbeispiel eines Reglers 100, der grundsätzlich gleich aufgebaut ist wie die anhand der Figuren 5 und 6 erläuterten Regler, so daß insofern auf die Beschreibung oben verwiesen wird. Gleiche Teile sind mit gleichen Bezugsziffern versehen.

Der Regler 100 zeichnet sich dadurch aus, daß der auch als Grund bezeichnete Boden der in das Gehäuse 11 eingebrachten Vertiefung 49 einer gewölbten Kontur 95 folgt. Die Kontur 95 ist der Form einer ausgelenkten beziehungsweise durchgebogenen elastischen Platte 75 angepaßt, die allerdings in der Darstellung gemäß Figur 7 aus Gründen der besseren Übersichtlichkeit nicht eingezeichnet ist. Aus Figur 6 ist jedoch ersichtlich, daß die elastische Platte 75 bei einer im Betrieb gegebenen Druckdifferenz zwischen den Druckräumen 17 und 19 sowie der Druckdifferenz zwischen dem Druckraum 17 und der Medienverbindung 3 nach unten in Richtung zu dem Vorsprung 83 ausgelenkt ist, so daß der Durchlaßspalt 27 gegenüber einer entspannten Ruheposition der elastischen Platte verkleinert wird. Es muß sichergestellt sein, daß auch im durchgebogenen Zustand der Platte in einer Grundstellung ein Durchlaßspalt zwischen der Unterseite der Platte und der Ringfläche 53 gegeben ist.

Die Vertiefung 49 wird von einer ebenfalls in die Oberfläche 47 des Gehäuses 11 eingebrachte Ringnut umgeben, die in einem Abstand zur Vertiefung 49 liegt, damit hydraulisch von dieser getrennt ist, wenn auf die Oberfläche 47 ein Deckel 77 (siehe Figur 6) druckdicht aufgesetzt wird. Der durch das Gehäuse 11 geführte Schnitt ist so gelegt, daß rechts von der Vertiefung 49 die in Figur 5 erwähnte zweite Nut 69 erkennbar ist, während links von der Vertiefung 49 die erste Nut 57 liegt. Die Schnittdarstellung in Figur 7 läßt erkennen, daß die zweite Nut 69 eine wesentlich geringere Tiefe als die erste Nut 57 aufweist, also der Durchlaßquerschnitt des durch die zweite Nut gebildeten dritten Strömungswiderstands 33 wesentlich kleiner ist als der des durch die erste Nut 57 gebildeten ersten Strömungswiderstands 21.

Der Boden der Vertiefung 49 weist einen den Vorsprung 83 umgebenden Ringkanal 97 auf, der von einer Ringfläche 99 umgeben ist. Die Oberfläche der Ringfläche 99 und die der Ringfläche 53 folgen ebenfalls der Kontur 95, so daß bei einer in die Vertiefung 49 eingelegten und ausgelenkten elastischen Platte zwischen den Ringflächen und der Unterseite der Platte schmale Spalte gebildet werden, deren Breite von der in radialer Richtung gemessenen Breite der Ringflächen abhängt. Bei einer Auslenkung der Platte wird durch die im zweiten Druckraum 19 vorhandene Flüssigkeit, die durch diese Spalte verdrängt wird, eine Dämpfung bewirkt.

Es zeigt sich also, daß den Oberflächen der als Steuerelement wirkenden Platte, die den ersten Druckraum 17 von dem zweiten Druckraum 19 trennt, Dämpfungsflächen zugeordnet werden können, deren Kontur an die Kontur der ausgelenkten Platte angepaßt ist und die mit der Oberfläche der Platte schmale Spalte bilden, durch die das Hydraulikmedium bei einer Auslenkung der Platte hindurchfließen muß, was die erwähnte Dämpfung bewirkt. Die Dämpfung tritt unabhängig davon ein, ob im ersten Druckraum 17 ein Hydraulikmedium oder Gas vorhanden ist.

Auch bei dem in Figur 7 dargestellten Ausführungsbeispiel ist es möglich, den oberhalb der hier lediglich gestrichelt angedeuteten elastischen Platte 75 gelegenen ersten Druckraum 17 mit einem Gas zu füllen. Es ist dabei möglich, bei einer Gasfüllung des ersten Druckraumes 17 auf die zweite Nut 69 und auf den dritten Strömungswiderstand 33 zu verzichten. Denkbar ist es jedoch auch, den dritten Strömungswiderstand 33, also den Bypass, mit dem Gasvolumen zu kombinieren und zusätzlich den Boden der Vertiefung 49 nach unten gewölbt auszubilden, so daß sich die Kontur 95 ergibt. Denkbar ist es auch, daß der erste Druckraum 17, wie anhand von Figur 1 erläutert, mit Hydraulikflüssigkeit gefüllt ist. In einem solchen Fall kann in den Druckraum 17 ein Konturkörper eingebracht werden, dessen Oberfläche in etwa der Form der ausgelenkten elastischen Platte entspricht, so daß auch hier zwischen Platte und Konturkörper ein schmaler, eine Dämpfung bewirkender Spalt entsteht.

Bei dem anhand der Figuren 1 bis 7 dargestellten Reglertyp handelt es sich nach allem um einen sogenannten Progressiv-Mengenregler für gasförmige und flüssige Medien, der bei steigendem Druck in der Verbindung zum Verbraucher, beispielsweise in der Medienverbindung 3, ein Ansteigen des dem Verbraucher zugeführten Medienvolumenstromes bewirkt. Der hier beschriebene Regler unterscheidet sich also von dem Verhalten üblicher Festdrosseln, bei denen die Durchflußmenge mit steigendem Druck abnimmt.

Es hat sich insgesamt als vorteilhaft erwiesen, wenn Regler der hier angesprochenen Art in unmittelbarer Nähe zu den zugehörigen Verbrauchern beziehungsweise zur Hydrostatik-/Aerostatiktasche angeordnet sind. Schwingungen des Reglers lassen sich damit besonders effektiv verhindern, da die kinetische Energie der Flüssigkeit und die Kompressibilität des Mediums in der Medienverbindung 3 dann sehr klein sind.

Nach allem wird deutlich, daß zur Reduzierung der Schwingungsneigung des Reglers auch zwei oder mehrere der hier beschriebenen Maßnahmen beziehungsweise Einrichtungen vorgesehen werden können. Beispielsweise kann ein Bypass mit einem Gasvolumen kombiniert werden, das einem Druckraum zur Dämpfung zugeordnet ist. Auch können bei den verschiedenen Ausführungsformen eine oder mehrere Dämpfungsflächen vorgesehen werden, die die Schwingungsneigung des Steuerelements verringern.

## Patentansprüche

1. Regler (1) zur Regelung eines mindestens einer Hydrostatik- oder Aerostatiktasche einer Lagerung, Gewindespindelmutter oder einer Führung von einer Medienversorgung zugeführten Medienstromes, mit von einem gegen die Kraft eines Federelements (13) beweglichen Steuerelement (15) getrennten Druckräumen, von denen ein mit einem ersten Druckniveau (p1) beaufschlagter erster Druckraum (17) unmittelbar mit der Medienversorgung, ein mit einem niedrigeren zweiten Druckniveau (p2) beaufschlagter zweiter Druckraum (19) über einen ersten Strömungswiderstand (21) mit der Medienversorgung und ein dritter Druckraum, der mit einem dritten Druckniveau (p3) beaufschlagt ist, das dem in der Hydrostatik- oder Aerostatiktasche entspricht, mit der Hydrostatik- oder Aerostatiktasche verbunden ist, wobei durch das Steuerelement (15) ein zwischen dem zweiten und dritten Druckraum angeordneter, den der Tasche zugeführten Medienstrom beeinflussender, variabler zweiter Strömungswiderstand (25), dessen Größe durch die Kraftwirkung des ersten Druckraumes (17) angehoben, durch die Wirkung der Federkraft sowie die Kraftwirkungen des zweiten und dritten Druckraumes aber vermindert wird, ausgebildet ist, **dadurch gekennzeichnet, daß** ein mit einem dritten - vorzugsweise festen- Strömungswiderstand (33) versehener Bypass (29) vorgesehen ist, der einerseits mit der Hydrostatik- oder Aerostatiktasche und andererseits über den ersten Strömungswiderstand (21) mit der zugeführten Medienversorgung verbunden ist.

2. Regler nach Anspruch 1, **dadurch gekennzeichnet, dass** der dritte Strömungswiderstand (33) so groß ausgelegt oder eingestellt ist, dass der Medienstrom durch diesen Strömungswiderstand, wenn das dritte Druckniveau (p3) gleich Null ist, nahezu dem Medienstrom entspricht, welcher ohne den Bypass (29) und den dritten Strömungswiderstand (33) bei dem genannten Druck in der Tasche durch den Regler (1) strömen würde.

3. Regler nach Anspruch 1 oder 2, **dadurch gekennzeichnet, daß** der dritte Strömungswiderstand (33) als Nut (69) in die Fläche (47) des Reglergehäuses (11) eingearbeitet ist.

4. Regler (1) zur Regelung eines mindestens einer Hydrostatiktasche einer Lagerung, Gewindespindelmutter oder einer Führung von einer Medienversorgung zugeführten flüssigen Medienstromes, mit von einem gegen die Kraft eines Federelements (13) beweglichen Steuerelement (15) getrennten Druckräumen, von denen ein mit einem ersten Druckniveau (p1) beaufschlagter erster Druckraum (17) mit der Medienversorgung, ein mit einem niedrigeren zweiten Druckniveau (p2) beaufschlagter zweiter Druckraum (19) über einen ersten Strömungswiderstand (21) mit der Medienversorgung und ein dritter Druckraum, der mit einem dritten Druckniveau (p3) beaufschlagt ist, das dem in der Hydrostatiktasche entspricht, mit der Hydrostatiktasche verbunden ist, wobei durch das Steuerelement (15) ein zwischen dem zweiten und dritten Druckraum angeordneter, den der Tasche zugeführten Medienstrom beeinflussender, variabler zweiter Strömungswiderstand (25), dessen Größe durch die Kraftwirkung des ersten Druckraumes (17) angehoben, durch die Wirkung der Federkraft sowie die Kraftwirkungen des zweiten und dritten Druckraumes aber vermindert wird, ausgebildet ist, **dadurch gekennzeichnet, daß** der erste Druckraum (17) mit einem Gasvolumen (39) in Verbindung steht.

5. Regler nach Anspruch 4, **dadurch gekennzeichnet, daß** das Gasvolumen (39) unmittelbar im ersten Druckraum (17) vorgesehen ist.

6. Regler nach Anspruch 4 oder 5, **dadurch gekennzeichnet, daß** das Gasvolumen (39) den ersten Druckraum (17) ausfüllt und sich über eine Verbindungsleitung in einen Vorratsbehälter (41) erstreckt.

7. Regler nach einem der Ansprüche 4 bis 6, **dadurch gekennzeichnet, daß** das Gasvolumen (39) mit dem von der Medienversorgung bereitgestellten Druck (erstes Druckniveau (p1)) beaufschlagt wird.

8. Regler nach Anspruch 6 oder 7, **dadurch gekennzeichnet, daß** der Vorratsbehälter (41) in das Reglergehäuse (11) integriert ist.

9. Regler nach einem der Ansprüche 4 bis 8, **dadurch gekennzeichnet, daß** das Gasvolumen (39) Luft oder Stickstoff umfaßt.

10. Regler (1) zur Regelung eines mindestens einer Hydrostatiktasche einer Lagerung, Gewindespindelmutter oder einer Führung von einer Medienversorgung zugeführten flüssigen Medienstromes, mit von einem gegen die Kraft eines Federelements (13) beweglichen Steuerelement (15) getrennten Druckräumen, von denen ein mit einem ersten Druckniveau (p1) beaufschlagter erster Druckraum (17) unmittelbar mit der Medienversorgung, ein mit einem niedrigeren zweiten Druckniveau (p2) beaufschlagter zweiter Druckraum (19) über einen ersten Strömungswiderstand (21) mit der Medienversorgung und ein dritter Druckraum, der mit einem dritten Druckniveau (p3) beaufschlagt ist, das dem in der Hydrostatiktasche entspricht, mit der Hydrostatiktasche verbunden ist, wobei durch das Steuerelement (15) ein zwischen dem zweiten und dritten Druckraum angeordneter, den der Tasche zugeführten Medienstrom beeinflussender, variabler zweiter Strömungswiderstand (25), dessen Größe durch die Kraftwirkung des ersten Druckraumes (17) angehoben, durch die Wirkung der Federkraft sowie die Kraftwirkungen des zweiten und dritten Druckraumes aber vermindert wird, ausgebildet ist, **dadurch gekennzeichnet, dass** der erste Druckraum (17) flüssigkeitsgefüllt ist und mit der Medienversorgung über einen vierten Strömungswiderstand (34) verbunden ist und dass der erste Druckraum (17) so groß ausgebildet ist, dass Schwingungen in der Zufuhrleitung (9) im ersten Druckraum (17) gedämpft werden.

11. Regler (1) zur Regelung eines mindestens einer Hydrostatiktasche einer Lagerung, Gewindespindelmutter oder einer Führung von einer Medienversorgung zugeführten flüssigen Medienstromes, mit von einem gegen die Kraft eines Federelements (13) beweglichen Steuerelement (15) getrennten Druckräumen, von denen ein mit einem ersten Druckniveau (p1) beaufschlagter erster Druckraum (17) unmittelbar mit der Medienversorgung, ein mit einem niedrigeren zweiten Druckniveau (p2) beaufschlagter zweiter Druckraum (19) über einen ersten Strömungswiderstand (21) mit der Medienversorgung und ein dritter Druckraum, der mit einem dritten Druckniveau (p3) beaufschlagt ist, das dem in der Hydrostatiktasche entspricht, mit der Hydrostatiktasche verbunden ist, wobei durch das Steuerelement (15) ein zwischen dem zweiten und dritten Druckraum angeordneter, den der Tasche zugeführten Medienstrom beeinflussender, variabler zweiter Strömungswiderstand (25), dessen Größe durch die Kraftwirkung des ersten Druckraumes (17) angehoben, durch die Wirkung der Federkraft sowie die Kraftwirkungen des zweiten und dritten Druckraumes aber vermindert wird, ausgebildet ist, **dadurch gekennzeichnet, dass** der erste Druckraum (17) gegenüber einem gasgefüllten Raum durch ein elastisches Federelement (16) zumindest weitgehend dicht abgegrenzt wird.

12. Regler nach Anspruch 11, **dadurch gekennzeichnet, daß** das elastische Federelement (16) aus einer elastischen Platte (20) besteht, welche zumindest weitgehend druckdicht mit dem Gehäuse (11) verbunden ist.

13. Regler nach Anspruch 11, **dadurch gekennzeichnet, daß** der gasgefüllte Raum mit der Atmosphäre verbunden ist.

14. Regler (1) zur Regelung eines mindestens einer Aerostatiktasche einer Lagerung, Gewindespindelmutter oder einer Führung von einer Medienversorgung zugeführten gasförmigen Medienstromes mit von einem gegen die Kraft eines Federelements (13) beweglichen Steuerelement (15) getrennten Druckräumen, von denen ein mit einem ersten Druckniveau (p1) beaufschlagter erster Druckraum (17) mit der Medienversorgung, ein mit einem niedrigeren zweiten Druckniveau (p2) beaufschlagter zweiter Druckraum (19) über einen ersten Strömungswiderstand (21) mit der Medienversorgung und ein dritter Druckraum, der mit einem dritten Druckniveau (p3) beaufschlagt ist, das dem in der Aerostatiktasche entspricht, mit der Aerostatiktasche verbunden ist, wobei durch das Steuerelement (15) ein zwischen dem zweiten und dritten Druckraum angeordneter, den der Tasche zugeführten Medienstrom beeinflussender, variabler zweiter Strömungswiderstand (25), dessen Größe durch die Kraftwirkung des ersten Druckraumes angehoben, durch die Wirkung der Federkraft sowie die Kraftwirkungen des zweiten und dritten Druckraumes aber vermindert wird, ausgebildet ist, **dadurch gekennzeichnet, daß** der erste Druckraum (17) mit einer Flüssigkeit gefüllt ist und daß diese Flüssigkeit mit dem von der Medienversorgung gelieferten Druck (erstes Druckniveau (p1)) beaufschlagt wird.

15. Regler nach Anspruch 14, **dadurch gekennzeichnet, daß** sich der flüssigkeitsgefüllte erste Druckraum (17) über eine Verbindungsleitung in einen Vorratsbehälter (41) erstreckt.

16. Regler nach Anspruch 15, **dadurch gekennzeichnet, daß** der Vorratsbehälter (41) in das Reglergehäuse (11) integriert ist.

17. Regler nach einem der vorhergehenden Ansprüche, **dadurch gekennzeichnet, daß** das Steuerelement (15) als elastische -vorzugsweise runde- Platte ausgebildet ist.

18. Regler nach Anspruch 17, **dadurch gekennzeichnet, daß** die Platte aus Metall und/oder Kunststoff besteht.

19. Regler nach Anspruch 17 oder 18, **dadurch gekennzeichnet, daß** die Platte in ihrem Randbereich zumindest annähernd druckdicht fixiert ist.

20. Regler nach einem der Ansprüche 17 bis 19, **dadurch gekennzeichnet, daß** in dem ersten Druckraum (17) und/oder in dem zweiten Druckraum (19) eine der elastischen Platte zugeordnete, als Dämpfungsfläche wirkende Oberfläche vorgesehen ist, deren Kontur an die der ausgelenkten elastischen Platte angepaßt ist.

21. Regler nach Anspruch 20, **dadurch gekennzeichnet, daß** an beiden Seiten des als elastische Platte ausgebildeten Steuerelements (15) Dämpfungsflächen vorgesehen sind.

22. Regler nach einem der Ansprüche 14 bis 18, **dadurch gekennzeichnet, daß** zwischen der Oberfläche des als elastische Platte ausgebildeten Steuerelements (15) und der/den Dämpfungsfläche(n) ein Spalt ausgebildet ist.

23. Regler nach einem der vorhergehenden Ansprüche, **dadurch gekennzeichnet, daß** der Regler (1, 1',10, 100) in unmittelbarer Nähe zur hydro- oder aerostatischen Tasche angeordnet ist.

## Claims

1. A regulator (1) for regulating a flow of medium fed from a medium supply to at least one hydrostatic or aerostatic pocket of a bearing, threaded spindle nut or a guide, with pressure chambers separated by a control element (15) movable against the force of a spring element (13), of which a first pressure chamber (17) subjected to a first pressure level (p1) is connected directly to the medium supply, a second pressure chamber (19) subjected to a second, lower pressure level (p2) is connected through a first flow resistance (21) to the medium supply and a third pressure chamber, which is subjected to a third pressure level (p3) which corresponds to that in the hydrostatic or aerostatic pocket is connected to the hydrostatic or aerostatic pocket, wherein a variable second flow resistance (25) which is disposed between the second and third pressure chambers and affects the flow of medium fed to the pocket and whose value is raised by the force action of the first pressure chamber (17) but is reduced by the action of the spring force and the force actions of the second and third pressure chambers is formed by the control element (15), **characterized in that** a bypass (29) with a third flow resistance (33) - preferably fixed - is provided and is connected at one end to the hydrostatic or aerostatic pocket and at the other end through the first flow resistance (21) to the admitted medium supply.

2. A regulator according to claim 1, **characterized in that** the third flow resistance (33) is made or adjusted to such a value that the flow of medium through this flow resistance, when the third pressure level (p3) is equal to zero, corresponds nearly to the flow of medium which would flow into the pocket at the said pressure through the regulator (1) without the bypass (29) and the third flow resistance (33).

3. A regulator according to claim 1 or 2, **characterized in that** the third flow resistance (33) is machined as a groove (69) in the surface (47) of the regulator housing (11).

4. A regulator (1) for regulating a flow of liquid medium fed from a medium supply to at least one hydrostatic pocket of a bearing, threaded spindle nut or a guide, with pressure chambers separated by a control element (15) movable against the force of a spring element (13), of which a first pressure chamber (17) subjected to a first pressure level (p1) is connected to the medium supply, a second pressure chamber (19) subjected to a second, lower pressure level (p2) is connected through a first flow resistance (21) to the medium supply and a third pressure chamber, which is subjected to a third pressure level (p3) which corresponds to that in the hydrostatic pocket is connected to the hydrostatic pocket, wherein a variable second flow resistance (25) which is disposed between the second and third pressure chambers and affects the flow of medium fed to the pocket and whose value is raised by the force action of the first pressure chamber (17) but is reduced by the action of the spring force and the force actions of the second and third pressure chambers is formed by the control element (15), **characterized in that** the first pressure chamber (17) is in communication with a gas volume (39).

5. A regulator according to claim 4, **characterized in that** the gas volume (39) is provided directly in the first pressure chamber (17).

6. A regulator according to claim 4 or 5, **characterized in that** the gas volume (39) fills the first pressure chamber (17) and extends via a connecting line to a reservoir (41).

7. A regulator according to any of claims 4 to 6, **characterized in that** the gas volume (39) is subjected to the pressure (first pressure level (p1)) provided by the medium supply.

8. A regulator according to claim 6 or 7, **characterized in that** the reservoir (41) is integrated in the regulator housing (11).

9. A regulator according to any of claims 4 to 8, **characterized in that** the gas volume (39) comprises air or nitrogen.

10. A regulator (1) for regulating a flow of liquid medium fed from a medium supply to at least one hydrostatic pocket of a bearing, threaded spindle nut or a guide, with pressure chambers separated by a control element (15) movable against the force of a spring element (13), of which a first pressure chamber (17) subjected to a first pressure level (p1) is connected directly to the medium supply, a second pressure chamber (19) subjected to a second, lower pressure level (p2) is connected through a first flow resistance (21) to the medium supply and a third pressure chamber, which is subjected to a third pressure level (p3) which corresponds to that in the hydrostatic pocket is connected to the hydrostatic pocket, wherein a variable second flow resistance (25) which is disposed between the second and third pressure chambers and affects the flow of medium fed to the pocket and whose value is raised by the force action of the first pressure chamber (17) but is reduced by the action of the spring force and the force actions of the second and third pressure chambers is formed by the control element (15), **characterized in that** the first pressure chamber (17) is filled with fluid and is connected to the medium supply through a fourth flow resistance (34) and **in that** the first pressure chamber (17) is made so large that oscillations in the supply line (9) into the first pressure chamber (17) are damped.

11. A regulator (1) for regulating a flow of liquid medium fed from a medium supply to at least one hydrostatic pocket of a bearing, threaded spindle nut or a guide, with pressure chambers separated by a control element (15) movable against the force of a spring element (13), of which a first pressure chamber (17) subjected to a first pressure level (p1) is connected directly to the medium supply, a second pressure chamber (19) subjected to a second, lower pressure level (p2) is connected through a first flow resistance (21) to the medium supply and a third pressure chamber, which is subjected to a third pressure level (p3) which corresponds to that in the hydrostatic pocket is connected to the hydrostatic pocket, wherein a variable second flow resistance (25) which is disposed between the second and third pressure chambers and affects the flow of medium fed to the pocket and whose value is raised by the force action of the first pressure chamber (17) but is reduced by the action of the spring force and the force actions of the second and third pressure chambers is formed by the control element (15), **characterized in that** the first pressure chamber (17) is separated at least largely tightly from a gas-filled chamber by an elastic spring element (16).

12. A regulator according to claim 11, **characterized in that** the elastic spring element (16) consists of an elastic plate (20) which is connected at least largely pressure-tight to the housing (11).

13. A regulator according to claim 11, **characterized in that** the gas-filled chamber is connected to the atmosphere.

14. A regulator (1) for regulating a flow of gaseous medium fed from a medium supply to at least one aerostatic pocket of a bearing, threaded spindle nut or a guide, with pressure chambers separated by a control element (15) movable against the force of a spring element (13), of which a first pressure chamber (17) subjected to a first pressure level (p1) is connected to the medium supply, a second pressure chamber (19) subjected to a second, lower pressure level (p2) is connected through a first flow resistance (21) to the medium supply and a third pressure chamber, which is subjected to a third pressure level (p3) which corresponds to that in the aerostatic pocket is connected to the aerostatic pocket, wherein a variable second flow resistance (25) which is disposed between the second and third pressure chambers and affects the flow of medium fed to the pocket and whose value is raised by the force action of the first pressure chamber (17) but is reduced by the action of the spring force and the force actions of the second and third pressure chambers is formed by the control element (15), **characterized in that** the first pressure chamber (17) is filled with a liquid and **in that** this liquid is subjected to the pressure (first pressure level (p1)) supplied by the medium supply.

15. A regulator according to claim 14, **characterized in that** the fluid-filled first pressure chamber (17) extends via a connecting line into a reservoir (41).

16. A regulator according to claim 15, **characterized in that** the reservoir (41) is integrated in the regulator housing (11).

17. A regulator according to any of the preceding claims, **characterized in that** the control element (15) is formed as an elastic - preferably round - plate.

18. A regulator according to claim 17, **characterized in that** the plate consists of metal and/or plastic.

19. A regulator according to claim 17 or 18, **characterized in that** the plate is fixed at least approximately pressure-tight at its edge region.

20. A regulator according to any of claims 17 to 19, **characterized in that** a surface acting as a damping surface is provided in the first pressure chamber (17) and/or in the second pressure chamber (19), associated with the elastic plate, and with its contour matched to the deflected elastic plate.

21. A regulator according to claim 20, **characterized in that** damping surfaces are provided on both sides of the control element (15) formed as an elastic plate.

22. A regulator according to any of claims 14 to 18, **characterized in that** a gap is formed between the surface of the control element (15) formed as an elastic plate and the damping surface(s).

23. A regulator according to any of the preceding claims, **characterized in that** the regulator (1, 1', 10, 100) is arranged in direct proximity to the hydrostatic or aerostatic pocket.

## Revendications

1. Régulateur (1) pour réguler un débit de fluide fourni à au moins une poche hydrostatique ou aérostatique d'un palier, d'un écrou de broche filetée ou d'un moyen de guidage d'un flux, à partir d'une alimentation en fluide, comprenant des chambres de pression séparées par un élément de commande (15) mobile contre la force d'un élément de ressort (13), dont une première chambre de pression (17) sollicitée par un premier niveau de pression (p1), est directement reliée à l'alimentation en fluide, une seconde chambre de pression (19) sollicitée par un second niveau de pression (p2) plus faible est reliée par l'intermédiaire d'une première résistance fluidique (21) à l'alimentation en fluide, et une troisième chambre de pression sollicitée par un troisième niveau de pression (p3) qui correspond à celui de la poche hydrostatique ou aérostatique, est reliée à cette poche hydrostatique ou aérostatique,
l'élément de commande (15) formant une seconde résistance fluidique (25) variable prévue entre la seconde et la troisième chambre de pression, influençant le flux fourni à la poche, résistance dont l'amplitude est relevée par l'effet de la force développée par la première chambre de pression (17), mais qui est réduite par l'action de la force de ressort et par les actions des forces de la seconde et de la troisième chambre de pression,
**caractérisé en ce qu'**
une dérivation (29) ayant une troisième résistance fluidique (33), de préférence fixe, est reliée d'un côté à la poche hydrostatique ou aérostatique et de l'autre par une première résistance aéraulique (21) à l'alimentation en fluide.

2. Régulateur selon la revendication 1,
**caractérisé en ce que**
la troisième résistance fluidique (33) a une amplitude réglée ou conçue pour que le débit à travers cette résistance fluidique, lorsque le troisième niveau de pression (p3) est égal à zéro, corresponde pratiquement au débit de fluide qui s'écoulerait dans la poche par le régulateur (1), sans la dérivation (29) et sans la troisième résistance fluidique (33) à la pression indiquée.

3. Régulateur selon l'une quelconque des revendications 1 ou 2,
**caractérisé en ce que**
la troisième résistance fluidique (33) est réalisée comme une rainure (69) usinée dans la surface (47) du boîtier (11) du régulateur.

4. Régulateur (1) pour réguler un débit de fluide fourni à au moins une poche hydrostatique d'un palier, d'un écrou de broche filetée ou d'un moyen de guidage d'un flux, à partir d'une alimentation en fluide, comprenant des chambres de pression séparées par un élément de commande (15), mobile contre la force d'un élément de ressort (13), dont une première chambre de pression (17) sollicitée par un premier niveau de pression (p1), est directement reliée à l'alimentation en fluide, une seconde chambre de pression (19) sollicitée par un second niveau de pression (p2) plus faible est reliée par l'intermédiaire d'une première résistance fluidique (21) à l'alimentation en fluide, et une troisième chambre de pression sollicitée par un troisième niveau de pression (p3) qui correspond à celui de la poche hydrostatique, est reliée à cette poche hydrostatique,
l'élément de commande (15) formant une seconde résistance fluidique (25) variable prévue entre la seconde et la troisième chambre de pression, influençant le flux fourni à la poche, résistance dont l'amplitude est relevée par l'effet de la force développée par la première chambre de pression (17), mais qui est réduite par l'action de la force de ressort et par les actions des forces de la seconde et de la troisième chambre de pression,
**caractérisé en ce que**
la première chambre de pression (17) est reliée à un volume de gaz (39).

5. Régulateur selon la revendication 4,
**caractérisé en ce que**
le volume de gaz (39) est prévu directement dans la première chambre de pression (17).

6. Régulateur selon l'une quelconque des revendications 4 ou 5,
**caractérisé en ce que**
le volume de gaz (39) remplit la première chambre de pression (17) et s'étend par une conduite de liaison dans un réservoir d'alimentation (41).

7. Régulateur selon l'une quelconque des revendications 4 à 6,
**caractérisé en ce que**
le volume de gaz (39) est sollicité par la pression fournie par l'alimentation en fluide (premier niveau de pression p1).

8. Régulateur selon l'une quelconque des revendications 6 ou 7,
**caractérisé en ce que**
le réservoir (41) est intégré au boîtier (11) du régulateur.

9. Régulateur selon l'une quelconque des revendications 4 à 8,
**caractérisé en ce que**
le volume de gaz (39) contient de l'air ou de l'azote.

10. Régulateur (1) pour réguler un débit de fluide fourni à au moins une poche hydrostatique d'un palier, d'un écrou de broche filetée ou d'un moyen de guidage d'un flux, à partir d'une alimentation en fluide, comprenant des chambres de pression séparées par un élément de commande (15), mobile contre la force d'un élément de ressort (13), dont une première chambre de pression (17) sollicitée par un premier niveau de pression (p1), est directement reliée à l'alimentation en fluide une seconde chambre de pression (19) sollicitée par un second niveau de pression (p2) plus faible est reliée par l'intermédiaire d'une première résistance fluidique (21) à l'alimentation en fluide, et une troisième chambre de pression sollicitée par un troisième niveau de pression (p3) qui correspond à celui de la poche hydrostatique, est reliée à cette poche hydrostatique,
l'élément de commande (15) formant une seconde résistance fluidique (25) variable prévue entre la seconde et la troisième chambre de pression, influençant le flux fourni à la poche, résistance dont l'amplitude est relevée par l'effet de la force développée par la première chambre de pression (17), mais qui est réduite par l'action de la force de ressort et par les actions des forces de la seconde et de la troisième chambre de pression,
**caractérisé en ce que**
la première chambre de pression (17) est remplie de fluide et elle est reliée à l'alimentation en fluide par une quatrième résistance fluidique (34) et la première chambre de pression (17) est réalisée de façon à amortir les vibrations de la conduite d'alimentation (9) de la première chambre de pression (17).

11. Régulateur (1) pour réguler un débit de fluide fourni à au moins une poche hydrostatique d'un palier, d'un écrou de broche filetée ou d'un moyen de guidage d'un flux, à partir d'une alimentation en fluide, comprenant des chambres de pression séparées par un élément de commande (15), mobile contre la force d'un élément de ressort (13), dont une première chambre de pression (17) sollicitée par un premier niveau de pression (p1), est directement reliée à l'alimentation en fluide, une seconde chambre de pression (19) sollicitée par un second niveau de pression (p2) plus faible est reliée par l'intermédiaire d'une première résistance fluidique (21) à l'alimentation en fluide, et une troisième chambre de pression sollicitée par un troisième niveau de pression (p3) qui correspond à celui de la poche hydrostatique, est reliée à cette poche hydrostatique,
l'élément de commande (15) formant une seconde résistance fluidique (25) variable prévue entre la seconde et la troisième chambre de pression, influençant le flux fourni à la poche, résistance dont l'amplitude est relevée par l'effet de la force développée par la première chambre de pression (17), mais qui est réduite par l'action de la force de ressort et par les actions des forces de la seconde et de la troisième chambre de pression,
**caractérisé en ce que**
la première chambre de pression (17) est délimitée dans une très large mesure de manière étanche par un élément de ressort élastique (16) par une chambre remplie de gaz.

12. Régulateur selon la revendication 11,
**caractérisé en ce que**
l'élément de ressort élastique (16) est formé d'une plaque élastique (20) qui est reliée au boîtier (11) de manière étanche à la pression au moins dans une large mesure.

13. Régulateur selon la revendication 11,
**caractérisé en ce que**
la chambre remplie de gaz est reliée à l'atmosphère.

14. Régulateur (1) pour réguler un débit de fluide fourni à au moins une poche aérostatique d'un palier, d'un écrou de broche filetée ou d'un moyen de guidage d'un flux, à partir d'une alimentation en fluide, comprenant des chambres de pression séparées par un élément de commande (15), mobile contre la force d'un élément de ressort (13), dont une première chambre de pression (17) sollicitée par un premier niveau de pression (p1), est directement reliée à l'alimentation en fluide, une seconde chambre de pression (19) sollicitée par un second niveau de pression (p2) plus faible est reliée par l'intermédiaire d'une première résistance fluidique (21) à l'alimentation en fluide, et une troisième chambre de pression sollicitée par un troisième niveau de pression (p3) qui correspond à celui de la poche aérostatique, est reliée à cette poche aérostatique,
l'élément de commande (15) formant une seconde résistance fluidique (25) variable prévue entre la seconde et la troisième chambre de pression, influençant le flux fourni à la poche, résistance dont l'amplitude est relevée par l'effet de la force développée par la première chambre de pression (17), mais qui est réduite par l'action de la force de ressort et par les actions des forces de la seconde et de la troisième chambre de pression,
**caractérisé en ce que**
la première chambre de pression (17) est remplie d'un liquide et ce liquide est mis à la pression fournie par l'alimentation en fluide (premier niveau de pression p1).

15. Régulateur selon la revendication 14,
**caractérisé en ce que**
la première chambre de pression (17) remplie de fluide s'étend par une première conduite de liaison à un réservoir (41).

16. Régulateur selon la revendication 15,
**caractérisé en ce que**
le réservoir (41) est intégré au boîtier de régulateur (11).

17. Régulateur selon l'une quelconque des revendications précédentes,
**caractérisé en ce que**
l'élément de commande (15) est une plaque élastique, de préférence ronde.

18. Régulateur selon la revendication 17,
**caractérisé en ce que**
la plaque est en métal et/ou en matière plastique.

19. Régulateur selon l'une quelconque des revendications 17 ou 18,
**caractérisé en ce qu'**
au niveau de son bord la plaque est fixée au moins sensiblement de manière étanche à la pression.

20. Régulateur selon l'une quelconque des revendications 17 à 19,
**caractérisé par**
une plaque élastique installée dans la première chambre de pression (17) et/ou dans la seconde chambre de pression (19) comme surface à effet d'amortissement dont le contour est adapté à la plaque élastique déployée.

21. Régulateur selon la revendication 20,
**caractérisé en ce que**
les deux faces de l'élément de commande (15) en forme de plaque élastique comportent des surfaces d'amortissement.

22. Régulateur selon l'une quelconque des revendications 14 à 18,
**caractérisé par**
un intervalle entre la surface de l'élément de commande (15) en forme de plaque élastique et la ou les surfaces d'amortissement.

23. Régulateur selon l'une quelconque des revendications précédentes,
**caractérisé en ce que**
le régulateur (1, 1', 10, 100) est prévu au voisinage direct de la poche hydrostatique ou aérostatique.
